# FASCICULE DE BREVET EUROPEEN

(11) **EP 0 425 348 B1**
(45) Date de publication et mention de la délivrance du brevet: **06.07.1994**
(21) Numéro de dépôt: 90402942.8
(22) Date de dépôt: 19.10.1990
(51) Int. Cl.: H04N 3/15, H04N 5/238

(54) **Capteur photosensible à temps d'intégration programmable**
Programmierbare Integrationszeit für Photosensor
Programmable integration time photosensor

(30) Priorité: 24.10.1989 FR 8913907
(43) Date de publication de la demande: 02.05.1991
(73) Titulaire: THOMSON-CSF SEMICONDUCTEURS SPECIFIQUES, 75008 Paris (FR)
(72) Inventeur: Cazaux, Yvon, F-92045 Paris la Défense (FR)
(74) Mandataire: Guérin, Michel

(56) Documents cités:
- EP-A- 0 281 178
- FR-A- 2 417 899
- US-A- 4 280 141

## Description

L'invention concerne les capteurs photosensibles, et surtout (mais non exclusivement) les barrettes photosensibles linéaires telles que celles qui servent à l'analyse d'images ligne par ligne (pour l'observation, la transmission par télécopie, le stockage d'image, etc.).

Une barrette est normalement constituée d'une ligne de M capteurs élémentaires et l'observation de l'image se fait en faisant défiler cette barrette perpendiculairement à sa direction d'allongement. La barrette se déplace devant l'image ou l'image se déplace devant la barrette. La vitesse de déplacement est en principe constante.

Chaque capteur engendre une charge électrique représentant l'intensité lumineuse (qu'on appellera "éclairement") émise par le point qui est devant lui. Ce capteur engendre donc successivement des charges électriques représentant l'éclairement respectif de chacun des points successifs qui défilent devant lui. L'observation d'une image consiste à recueillir des signaux électriques représentant les éclairements de tous les points d'image vus par la barrette.

Pour améliorer le rapport signal sur bruit des capteurs photosensibles, on a déjà proposé un principe de lecture qui utilise, pour l'observation d'un point d'image, non pas un seul capteur élémentaire mais une série de n cellules photosensibles élémentaires qui défilent les unes après les autres devant ce point. Une charge électrique proportionnelle à l'éclairement du point est engendrée par la première cellule pendant qu'elle est devant le point; puis c'est la deuxième cellule qui passe devant le point et une deuxième charge électrique est engendrée; ces deux charges sont additionnées, et ainsi de suite, jusqu'à ce que les n cellules élémentaires aient défilé devant le point. Mais pendant que la deuxième cellule observe le premier point d'image, la première cellule détecte l'éclairement d'un deuxième point d'image qui arrive devant elle; il est bien entendu nécessaire de ne pas mélanger la charge qu'elle engendre alors avec la charge qu'elle a engendrée au cours de l'observation du premier point. On prévoit donc un système de décalage temporel des charges avant de les additionner, ce décalage temporel étant exactement synchronisé avec le défilement relatif entre le capteur et l'image à observer.

Ces systèmes sont appelés capteurs à intégration et report de charge (en anglais ils sont connus sous le nom de : "time delay integration systems") : pour chaque point d'image, on intègre la charge engendrée par une première cellule pendant qu'elle est devant un premier point, puis on la reporte vers la deuxième cellule au moment où elle passe devant le même point d'image, et ainsi de suite jusqu'à la niéme cellule; la nième cellule fournit l'intégrale des charges engendrées à n instants successifs, ces instants correspondant tous à un même point d'image observé par n cellules différentes.

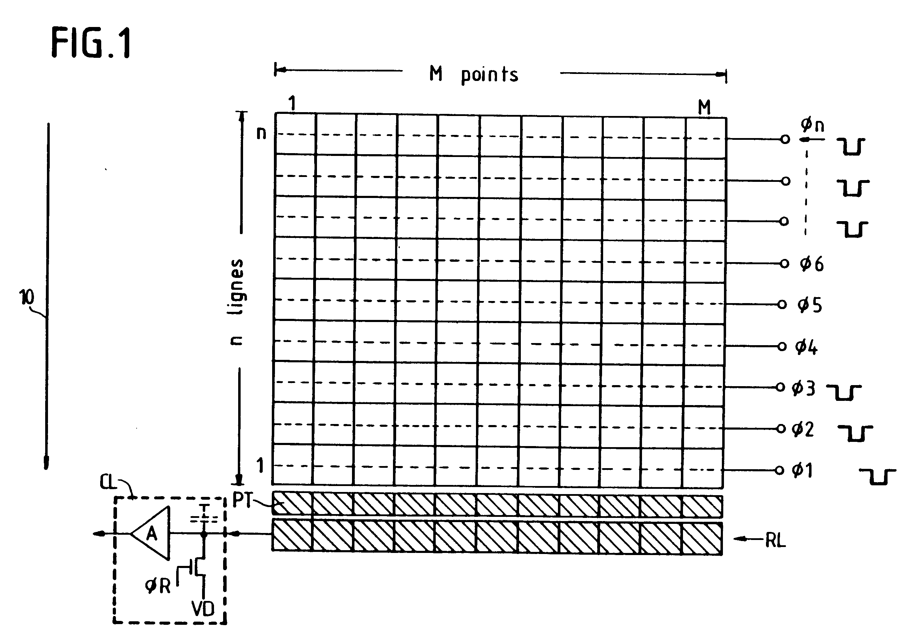

La figure 1 représente la constitution d'un tel système: le capteur est une barrette de M capteurs élémentaires en ligne. Mais chaque capteur comprend en fait n cellules élémentaires situées en colonne dans le sens de défilement de la barrette par rapport à l'image à analyser. La direction de défilement relatif est indiquée par une flèche 10 sur la figure 1.

Les cellules photosensibles élémentaires sont symbolisées par des rectangles élémentaires adjacents. Sous ces rectangles s'accumulent les charges engendrées par l'éclairement d'un point qui passe devant le rectangle. Chaque rectangle correspond en pratique à une portion superficielle de semiconducteur photosensible recouverte par une mince couche isolante elle-même recouverte d'au moins deux électrodes transparentes adjacentes. Ces électrodes servent d'une part à établir dans le semiconducteur des puits de potentiel pour stocker les charges engendrées, et d'autre part à établir, en combinaison avec les électrodes des cellules adjacentes, des potentiels de transfert pour faire passer ces charges d'une cellule à la suivante (en colonne) selon un principe classique de registre à décalage à transfert de charges. Le nombre d'électrodes par cellule dépend du type de registre qu'on veut réaliser.

Cette structure correspond à un capteur dont les cellules jouent à la fois le rôle de capteur photosensible et de cellule de registre à décalage mais l'invention pourrait s'appliquer à des structures dans lesquelles les fonctions de détection photosensible et de de transfert entre lignes sont séparées.

Les M capteurs en ligne (perpendiculairement à la flèche 10) sont physiquement séparés les uns des autres pour qu'il n'y ait pas de mélange entre les charges correspondant à deux capteurs adjacents latéralement.

Il y a donc en parallèle M registres à décalage en colonne de n cases chacun.

Ces M registres peuvent se vider à leur extrémité dans les cases d'un autre registre à décalage RL dit "registre de lecture" qui s'étend dans la direction des lignes de la barrette. Ce registre, à M cases, à entrées en parallèle et sortie série, permet d'évacuer cycliquement vers un amplificateur de sortie, par un décalage en ligne, les charges issues des M colonnes. Une électrode PT formant porte de transfert permet de vider les registres en colonne dans le registre de lecture en synchronisme avec le décalage des registres en colonne. Le registre de lecture est lui-même vidé horizontalement très rapidement entre chaque nouvelle arrivée de charges en provenance des registres en colonne. Un circuit de lecture CL comprenant essentiellement un convertisseur charge-tension et un amplificateur A est disposé en sortie du registre RL et fournit à sa sortie un signal vidéo représentant ligne par ligne l'image analysée par la barrette.

Le registre de lecture pourrait être remplacé par tout autre système de lecture des charges issues des M colonnes.

On notera que le registre de lecture et la porte de transfert PT sont masqués (par exemple par une couche d'aluminium) pour ne pas recevoir de lumière.

Dans la suite, on ne s'intéressera plus qu'aux registres à décalage à n cases disposés en colonne, l'invention n'étant pas liée à la présence du registre de lecture.

Comme on le sait, des registres à décalage peuvent être constitués de plusieurs manières différentes et on ne rentrera pas dans le détail de leur réalisation. Il suffit de se reporter à la littérature classique concernant les registres à décalage à transferts de charge : il y a des registres dits biphasés dans lesquels chaque case du registre comporte deux électrodes connectées ensemble et les électrodes de deux cases adjacentes sont commandées en opposition de phase l'une par rapport à l'autre. Il y a des registres à quatre phases dans lesquels chaque case du registre comporte quatre électrodes commandées par quatre phases successives, les phases étant les mêmes pour les électrodes correspondantes de deux cases adjacentes. Il y a aussi des registres fonctionnant en mode triphasé et des registres fonctionnant sur le mode connu en anglais sous le nom de mode "ripple clock" et qu'on peut traduire en français par mode à propagation de phase.

C'est ce dernier mode, à propagation de phase, qui est supposé utilisé dans l'exemple de la figure 1 : il y a deux électrodes par case, mais elles sont électriquement connectées. On a représenté chaque case photosensible de registres par un rectangle divisé en deux par une ligne pointillée. Les deux électrodes correspondent aux deux moitiés de rectangle. Une seule connexion extérieure contrôle le potentiel appliqué simultanément à ces deux électrodes et appliqué d'ailleurs simultanément à toutes les électrodes de la même ligne. La séquence de commande des électrodes du capteur comporte une série d'impulsions successives appliquées aux lignes successives de la barrette multilinéaire : une première impulsion ∅1 est appliquée à la première ligne, puis une deuxième impulsion ∅2 est appliquée à la deuxième ligne, etc., jusqu'à une n^{ième} impulsion qui est appliquée à la n^{ième} ligne, après quoi un cycle d'impulsions recommence.

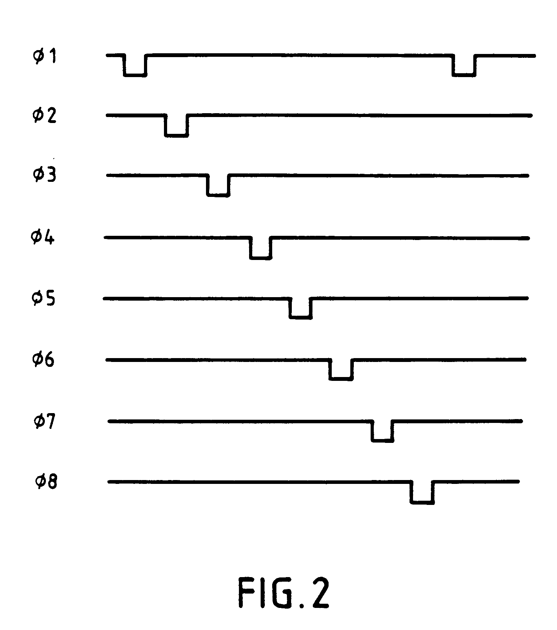

Les phases ∅1, ∅2, ... ∅n sont donc des impulsions successives qui se succèdent sans se recouvrir, selon un cycle tel qu'une nouvelle impulsion pour la phase ∅1 n'apparaît à nouveau que quand les impulsions correspondant aux n phases ont été toutes émises successivement. La figure 2 représente un cycle d'impulsions correspondant à ce mode, pour n=8 cases de registre.

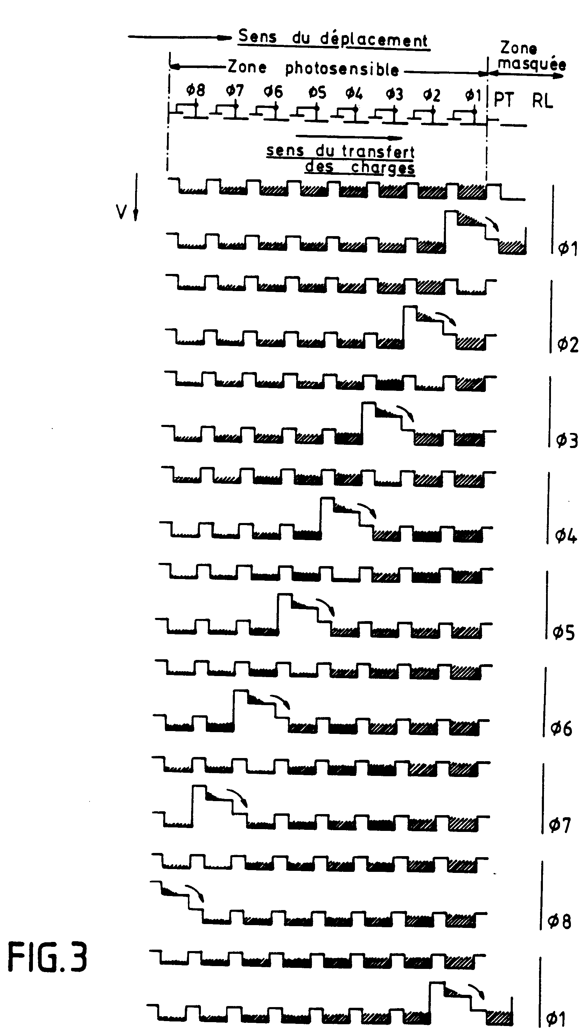

La figure 3 représente dans sa partie supérieure le registre à huit cases en colonne, avec, pour chaque case, deux électrodes adjacentes électriquement connectées ensemble; ces deux électrodes définissent au dessous d'elles des puits de potentiel de profondeur différentes par suite soit d'un dopage différent du semiconducteur qu'elles recouvrent soit d'une épaisseur d'isolant différente entre chaque électrode et le semiconducteur; au dessous de cette représentation schématique, la figure 3 représente les puits de potentiel successifs qui se créent sous ces électrodes au cours des huit phases successives, ainsi que les charges qui s'accumulent dans ces puits. L'accumulation résulte de deux phénomènes : d'une part l'éclairement des cases photosensibles du registre, et d'autre part le déversement des charges d'un puits à un puits adjacent (donc d'une case de registre à la suivante) sous l'effet des impulsions appliquées successivement d'une électrode à une électrode adjacente.

Comme on le voit sur la figure 3, la phase ∅1 provoque le déversement à la sortie du registre en colonne (vers le registre de lecture en ligne) des charges accumulées sous la dernière électrode du registre. Puis la phase ∅2 provoque le déversement sous cette dernière électrode des charges accumulées sous l'avant dernière, et ainsi de suite, la position de la zone de déversement se décale progressivement de la droite vers la gauche jusqu'à l'entrée du registre, après quoi le cycle recommence. Mais pendant ce décalage progressif, les cellules photosensibles qui composent les cases du registre ne cessent pas d'être éclairées et accumulent des charges proportionnelles à leur éclairement. Une case est ainsi éclairée par un point d'image pendant n impulsions, et, à la nième impulsion, les charges accumulées sont déversées dans une case adjacente qui va se situer au cours du cycle suivant en regard du même point d'image.

L'observation d'un point par une cellule élémentaire dure un cycle complet de n phases. Autrement dit, la vitesse de défilement de l'image sous la cellule est telle qu'un point parcoure la distance entre deux cases adjacentes du registre pendant le temps qu'il faut pour accomplir un cycle de n impulsions.

Dans ces barrettes multilinéaires à report de charge et intégration, on peut remarquer que le rapport signal sur bruit est amélioré par rapport à celui d'une barrette linéaire simple de M cellules. En effet, à fort niveau de signal, le bruit dominant est le bruit photonique, c'est-à-dire le bruit résultant de la création de paires électrons-trous sous l'effet de l'éclairement. Ce bruit est quadratique et est multiplié par la racine carrée de n si l'amplitude du signal est multipliée par n. Or le signal est bien multiplié en moyenne par n par rapport à ce qu'il serait avec une cellule unique au lieu de n cellules additionnant leurs signaux. A fort niveau, le rapport signal sur bruit est donc multiplié par la racine carrée de n. A bas niveau de signal, le bruit dominant est le bruit de lecture; or le système permet d'avoir toujours une seule lecture de charges alors que le signal est multiplié par n. Il y a donc amélioration du rapport signal sur bruit dans un rapport pouvant aller jusqu'à n.

On s'est aperçu cependant qu'il était difficile de recevoir avec un tel système des éclairements susceptibles de varier avec une grande dynamique. En effet, les cellules individuelles doivent être dimensionnées pour détecter convenablement un éclairement qu'elles reçoivent d'un point d'image, même si l'éclairement est faible. Cependant, pour améliorer la résolution, la taille des cellules élémentaires est limitée autant que possible. Mais ces cellules doivent aussi être dimensionnées pour recevoir par transfert la somme des éclairements reçus par toutes les cellules de la même colonne. Dès que l'éclairement est relativement important, on risque la saturation des cellules élémentaires : cette saturation est atteinte n fois plus vite que s'il n'y avait qu'une cellule. Le problème est d'autant plus crucial que n est grand (quand on veut une forte amélioration du rapport signal sur bruit) et que la taille des cellules élémentaires est réduite (quand on veut une bonne résolution d'image).

Un but de l'invention est d'éviter autant que possible cet inconvénient et d'améliorer le compromis entre résolution, dynamique, et rapport signal sur bruit.

On propose de programmer le nombre n de lignes utilisées en report et intégration de charges, pour lui donner soit la valeur n soit une valeur k plus petite que n.

On s'arrangera notamment pour pouvoir réduire le nombre de lignes lorsque l'éclairement est trop important.

Dans l'art antérieur, on a déjà proposé des moyens pour modifier le nombre de lignes actives; mais les moyens utilisés sont peu commodes.

Dans FR-A- 2417899, on utilise une matrice divisée en deux sous matrices alimentées par des conducteurs de signaux d'horloge différents pour chaque matrice : selon qu'on applique les signaux d'horloge à l'une des sous matrices ou à l'autre on modifie le nombre de lignes.

Dans US-A- 4 280 141 c'est la même chose, avec trois sous matrices.

Dans EP-A- 0 281 178, on utilise des électrodes de blocage supplémentaires intercalées entre les électrodes normales. De plus, il y a obligation de prévoir un drain d'évacuation placé latéralement. Enfin, quel que soit le nombre de lignes programmées, les charges circulent dans tout le registre et il n'y a pas séparation de la matrice entre deux zones sans transfert possible entre les zones.

Selon l'invention on utilise tout simplement les électrodes de registre à décalage permettant de décaler en colonne les charges engendrées et stockées. Au lieu de commander ces électrodes systématiquement pour effectuer des décalages périodiques, on commandera certaines des électrodes de manière à interdire systématiquement certains transferts, afin de limiter à un nombre k inférieur à n les additions et reports de charge lorsque l'éclairement est trop important. On peut prévoir que le nombre k peut varier en fonction de l'éclairement. Il y aura donc des électrodes de blocage commandées séparément des autres. Mais ces électrodes pourront être physiquement les mêmes électrodes qui servent aux décalages : lorsqu'elles servent d'électrodes de blocage elles inhibent les transferts pour limiter à k les additions de charges; lorsqu'elles servent d'électrodes de transfert, elles sont commandées cycliquement selon les cycles de décalage nécessaires aux transferts de charge.

Une définition possible de l'invention est la suivante :
Un capteur photosensible multilinéaire de n lignes fonctionnant en mode d'intégration et report de charges, organisé en n lignes de M colonnes de cellules photosensibles élémentaires, avec une programmation du nombre k de lignes effectivement utilisées en intégration et report de charges, chaque colonne constituant un registre à décalage et le capteur comportant des électrodes de registre en lignes permettant le transfert de charges stockées d'une ligne vers la ligne adjacente suivante pour tous les registres et le transfert des charges de la dernière ligne de cellules vers un étage de lecture, avec des signaux d'horloge communs à toutes les lignes pour provoquer ces transferts, caractérisé en ce qu'il est prévu en outre des moyens pour appliquer à certaines desdites électrodes dites "électrodes de blocage" soit les signaux d'horloge permettant le transfert, soit un potentiel de blocage interdisant tout transfert au niveau de cette électrode pendant que les autres électrodes situées entre cette électrode et l'étage de lecture continuent à recevoir des potentiels permettant des transferts, les électrodes de blocage étant des électrodes qui seraient de toutes façons prévues s'il n'y avait pas de programmation possible du nombre de lignes.

On peut prévoir alors soit une soit plusieurs électrodes ainsi susceptibles d'être commandées selon deux modes distincts; la position de celle des électrodes qui est effectivement utilisée en électrode de blocage détermine le nombre k (inférieur à n) de lignes entre lesquelles s'effectuent les additions et reports de charges : les électrodes situées de l'autre côté de l'électrode de blocage sélectionnée ne participent pas aux reports de charge.

Le blocage est mis en oeuvre à partir du moment où l'éclairement moyen dépasse un seuil déterminé; la position de l'électrode de blocage sélectionnée (s'il y en a plusieurs possibles) varie alors en fonction du niveau d'éclairement. Cet éclairement peut être mesuré en sortie de l'étage de lecture, en pratique à la sortie de l'amplificateur qui fournit le signal représentant l'image, mais on peut aussi imaginer d'autres systèmes de mesure, par exemple avec un capteur spécifique mesurant l'éclairement moyen de l'image ou de la portion d'image analysée par le capteur.

On prévoit de préférence que les lignes de cellules situées de l'autre côté de l'électrode de blocage sélectionnée peuvent évacuer les charges qu'elles accumulent vers un drain d'évacuation. Ce drain est de préférence situé à l'opposé de l'étage de lecture par rapport aux lignes de cellules.

On notera que le fait d'utiliser comme électrodes de blocage des électrodes qui sont de toutes façons nécessaires pour le transfert entre lignes permet de ne pas modifier le pas du registre d'un bout à l'autre de celui-ci, c'est-à-dire aussi bien là où des électrodes de blocage sont présentes que là où il n'y en a pas. Par conséquent l'invention permet non seulement de ne pas modifier le pas entre lignes (par rapport au pas d'un registre qui n'aurait pas de programmation du nombre de lignes) mais aussi de garder ce pas constant sur toute la longueur, ce qui est particulièrement important dans le cas où ce sont les cellules du registre qui sont photosensibles.

D'autres caractéristiques et avantages de l'invention apparaîtront à la lecture de la description détaillée qui suit et qui est faite en référence aux dessins annexés dans lesquels :
- la figure 1, déjà décrite, représente une barrette photosensible multilinéaire à intégration et report de charges;
- la figure 2 représente un diagramme temporel des phases de commande des registres en colonne de la barrette de la figure 1, en mode de propagation de phase ("ripple clock") à huit phases;
- la figure 3 est un diagramme représentant les puits de potentiels et accumulations de charges qui se forment au cours des différentes phases de fonctionnement du capteur de la figure 1;
- la figure 4 représente schématiquement une barrette multilinéaire modifiée selon la présente invention;
- la figure 5 représente un diagramme correspondant à celui de la figure 3, modifié par l'utilisation de l'invention.

Dans la suite, on ne reviendra pas sur ce qui a été décrit en détail concernant le fonctionnement des barrettes multilinéaires à intégration et report de charges : cette description reste valable pour la mise en oeuvre de l'invention avec les modifications qui vont maintenant être expliquées.

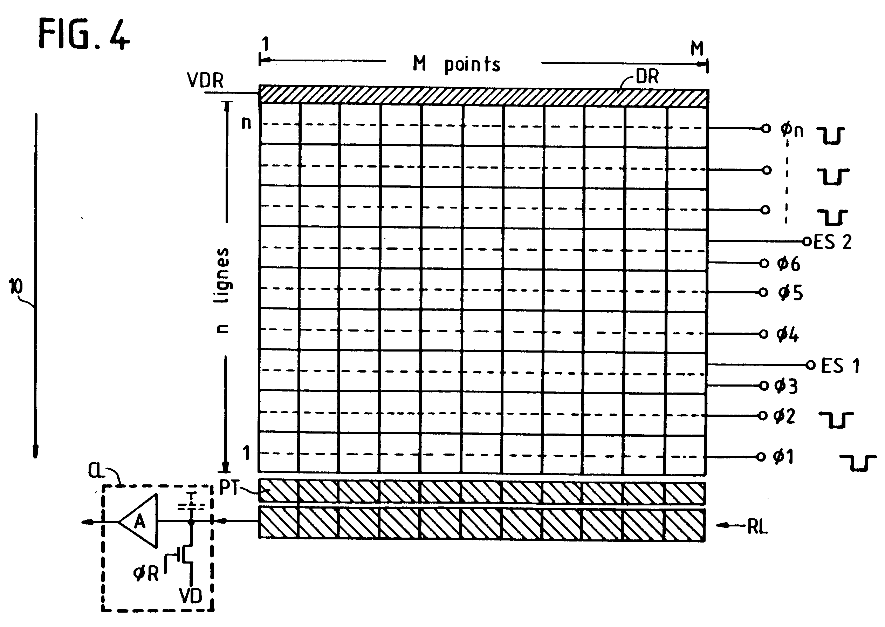

Sur la figure 4, on a représenté schématiquement un mode de réalisation de la barrette selon l'invention.

Le principe est que des moyens sont prévus pour limiter à volonté à une valeur k inférieure à n le nombre de lignes de la barrette multilinéaire, pour réaliser un report de charges seulement sur k lignes lorsque l'éclairement est trop important, et sur n lignes lorsque l'éclairement est relativement faible.

Pour cela, en prenant l'exemple le plus simple des registres fonctionnant en mode biphasé ou en mode à propagation de phase, on utilise certaines des électrodes en ligne en les déconnectant de l'électrode voisine à laquelle elles sont normalement connectées dans ces registres.

Autrement dit, si une ligne de registre comprend deux électrodes normalement connectées ensemble pour recevoir un même potentiel variant selon un cycle qui permet des transferts de charge, l'invention propose que certaines des lignes de registre (voire même toutes si on le souhaite) aient leurs deux électrodes déconnectées de manière à pouvoir être commandées séparément.

Si l'éclairement est tel qu'il n'y a pas de risque de saturation des cases de registre en colonne ou des cases du registre de lecture, les électrodes déconnectées seront "reconnectées", c'est-à-dire qu'on commandera deux électrodes adjacentes déconnectées par un même potentiel de manière à effectuer des transferts de charge exactement comme dans les barrettes multilinéaires de l'art antérieur.

Si au contraire l'éclairement est trop intense, on utilisera l'une des deux électrodes d'une ligne dans laquelle les électrodes sont déconnectées pour lui appliquer un potentiel qui interdit tout transfert de charges à l'endroit de cette ligne. L'intégration et le report de charges seront alors limités aux k lignes situées entre cette ligne de blocage et le registre de lecture. Selon la position de l'électrode de blocage actionnée, k sera plus ou moins grand. S'il y a plusieurs lignes dont les électrodes peuvent ainsi servir d'électrodes de blocage, k pourra varier. On fera alors un choix de la valeur de k, donc de la position de la ligne à actionner en mode de blocage, en fonction du niveau d'éclairement, k devant être d'autant plus petit que l'éclairement est plus grand.

La figure 4 donne un exemple de réalisation dans lequel il y a deux électrodes de blocage possibles, ES1 et ES2, la première permettant de limiter à trois lignes la barrette multilinéaire, la deuxième à six lignes.

Lorsque une électrode de blocage est ainsi actionnée en mode de blocage, les lignes du registre situées entre cette électrode et le registre de lecture sont actionnées en mode de transfert de charges permettant un fonctionnement en report et intégration de charges. Mais les autres électrodes, situées au delà de l'électrode de blocage peuvent ou non continuer à recevoir des potentiels de transfert de charge classiques; de toutes façons, si elles continuent à être actionnées pour exécuter des transferts, ces transferts sont inutiles et ne modifient pas les charges transmises au registre de lecture.

On prévoit de préférence qu'un drain d'évacuation de charges DR est situé le long de la ligne de cellules la plus éloignée du registre de lecture, de manière à permettre que les charges engendrées dans les lignes situées au delà de l'électrode de blocage s'éliminent toutes seules et ne risquent pas de passer sous l'électrode de blocage à force de s'accumuler. On prévoit bien entendu que le potentiel de blocage appliqué à l'électrode de blocage lorsqu'elle doit séparer le capteur en une zone active et une zone inactive est suffisamment bas pour constituer une barrière de potentiel n'autorisant aucun transfert entre les deux zones. Il est en particulier plus bas que les potentiels appliqués aux différentes électrodes en mode de transfert classique.

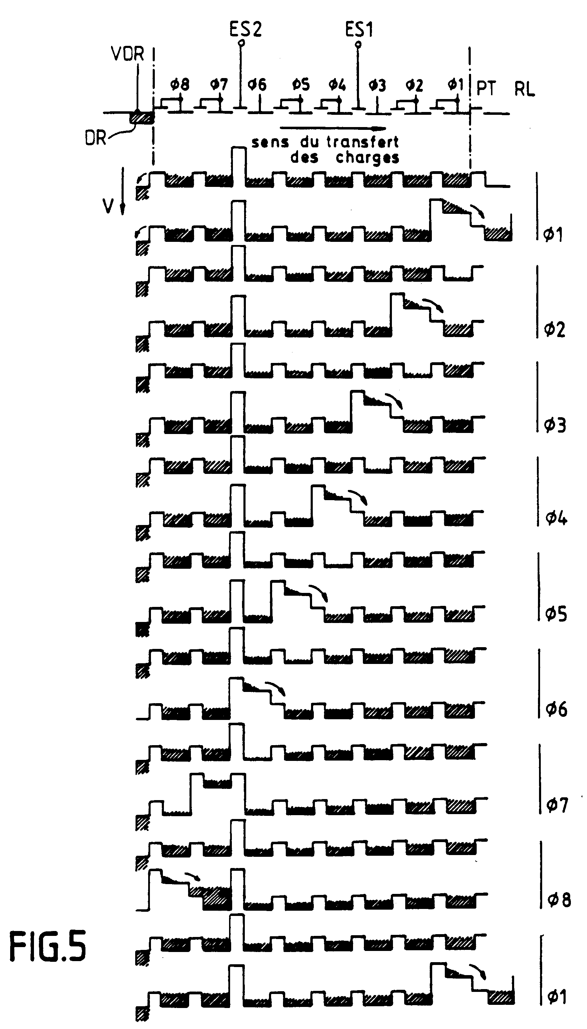

La figure 5 représente, de la même manière que la figure 3, d'une part la disposition physique des électrodes d'un registre en colonne, avec un drain DR à une extrémité du registre, d'autre part les potentiels créés dans le semiconducteur sous les différentes électrodes au cours des différentes phases de fonctionnement de la barrette. Dans l'exemple représenté, on a supposé que l'électrode ES2 est activée en blocage et crée une barrière de potentiel élevée séparant le capteur en deux zones, une zone inactive (à gauche) et une zone active à droite.

Dans la zone active, l'accumulation de charges sous l'effet de l'éclairement et des transferts entre cellules s'effectue normalement mais est limitée à k=6 lignes de cellules.

Dans la zone inactive, il y a rapidement, au bout de quelques cycles de n phases une saturation des cellules, mais le drain d'évacuation DR évite une accumulation excessive qui pourrait aboutir à un débordement à travers l'électrode de blocage.

Si l'éclairement diminue, par exemple lors de l'observation d'une autre image, ou pour une partie plus sombre de la même image, l'électrode ES2 cesse d'être commandée par un potentiel bas de blocage et elle est reconnectée l'électrode adjacente correspondant à la même ligne de cellules, pour être à nouveau commandée par les impulsions classiques de décalage du mode à propagation de phase.

Pour déterminer si une électrode de blocage doit être actionnée en mode de blocage et pour déterminer laquelle des électrodes de blocage doit être utilisée, on mesurera l'éclairement moyen de l'image ou de la portion d'image observée. L'éclairement moyen peut être mesuré par filtrage de la sortie du circuit de lecture CL, avec une constante de temps permettant de réagir assez rapidement (au plus le temps de quelques lignes d'analyse d'image) dès que le niveau d'éclairement risque de provoquer une saturation.

L'éclairement moyen détecté peut être comparé à des seuils correspondants chacun à l'utilisation d'une électrode de blocage respective.

L'éclairement peut aussi être mesuré par un capteur séparé qui mesure l'éclairement global moyen de l'ensemble de l'image ou de l'ensemble de la portion d'image en cours d'analyse.

L'invention est bien entendu applicable à des capteurs multilinéaires dans laquelle les cellules sont constituées de manière à réaliser d'autres modes de décalage que le mode à propagation de phase.

Lorsque les électrodes sont constituées pour faire un registre du type biphasé, on rappelle que chaque ligne de cellules comprend deux électrodes adjacentes recevant le même potentiel (comme dans le cas du mode à propagation de phase). Les potentiels appliquées aux électrodes comportent deux phases complémentaires ∅1 et ∅2 (et non n phases) et les électrodes d'une ligne reçoivent un potentiel en opposition de phase avec le potentiel appliqué aux électrodes des lignes adjacentes. Selon l'invention, une électrode de blocage sera constituée en séparant électriquement les deux électrodes d'une ligne et en appliquant à l'une d'elles un potentiel de blocage, pendant que les autres électrodes continuent à recevoir des potentiels de transfert selon les deux phases ∅1 et ∅2.

Dans un autre exemple, lorsque les électrodes sont disposées de manière à faire un registre à décalage du type quadriphasé, on rappelle que chaque cellule comporte quatre électrodes alimentées par quatre phases successives ∅1 à ∅4; les électrodes de la cellule suivante reçoivent les mêmes phases ∅1 à ∅4. On constitue une électrode de blocage parmi ces électrodes grâce à un circuit logique permettant, au choix, d'appliquer un potentiel de blocage ou la phase normale à cette électrode.

L'invention peut être appliquée à d'autres types de constitution de registres, et notamment des registres de type triphasés, et des registres à mode de propagation de phases dans lesquels le nombre de phases du cycle n'est pas égal au nombre n de lignes du capteur (par exemple il y a seize lignes agencées en deux groupes de huit lignes fonctionnant chacun selon un cycle à huit phases).

## Revendications

1. Capteur photosensible multilinéaire de n lignes fonctionnant en mode d'intégration et report de charges, organisé en n lignes de M colonnes de cellules photosensibles élémentaires, avec une programmation du nombre k de lignes effectivement utilisées en intégration et report de charges, chaque colonne constituant un registre à décalage et le capteur comportant des électrodes de registre en lignes permettant le transfert de charges stockées d'une ligne vers la ligne adjacente suivante pour tous les registres et le transfert des charges de la dernière ligne de cellules vers un étage de lecture (RL), avec des signaux d'horloge communs à toutes les lignes pour provoquer ces transferts, caractérisé en ce qu'il est prévu en outre des moyens pour appliquer à certaines desdites électrodes dites "électrodes de blocage" (ES1, ES2) soit les signaux d'horloge permettant le transfert, soit un potentiel de blocage interdisant tout transfert au niveau de cette électrode pendant que les autres électrodes situées entre cette électrode et l'étage de lecture continuent à recevoir des potentiels permettant des transferts, les électrodes de blocage étant des électrodes qui seraient de toutes façons prévues s'il n'y avait pas de programmation possible du nombre de lignes.

2. Capteur selon la revendication 1, caractérisé en ce qu'il comporte plusieurs électrodes de blocage à des positions de ligne déterminées dans le capteur, et des moyens pour faire fonctionner en mode de blocage une de ces électrodes, choisie en fonction de l'éclairement.

3. Capteur selon l'une des revendications précédentes, caractérisé en ce que le pas des lignes correspondant aux électrodes de registre est constant pour toutes les lignes, y compris celles qui incluent des électrodes de blocage.

4. Capteur selon l'une des revendications 1 à 3, caractérisé en ce que, l'étage de lecture étant situé d'un côté du capteur, il est prévu de l'autre côté un drain (DR) d'évacuation de charges évitant le débordement de charges à travers l'électrode de blocage.

5. Capteur selon l'une des revendications 1 à 4, caractérisé en ce que la programmation du nombre k de lignes utilisées en intégration et report de charges est fonction de l'éclairement de l'image analysée, mesuré par filtrage en sortie d'un étage de lecture des charges engendrées par le capteur.

6. Capteur selon l'une des revendications 1 à 5, caractérisé en ce que la programmation du nombre k de lignes utilisées en intégration et report de charges est fonction de l'éclairement de l'image analysée ou d'une portion de l'image analysée, mesuré par un capteur spécifique.

## Patentansprüche

1. Im Integrationsmodus und mit Ladungsübertragung arbeitender mehrzeiliger Photosensor mit n Zeilen, der in n Zeilen und M Spalten lichtempfindlicher Elementarzellen organisiert ist, mit einer Programmierung der Anzahl k der bei der Integration und der Ladungsübertragung effektiv benutzten Zeilen, wobei jede Spalte ein Schieberegister bildet und der Sensor Zeilenregisterelektroden enthält, die die Übertragung von gespeicherten Ladungen einer Zeile zur angrenzenden nächsten Zeile für alle Register und die Übertragung von Ladungen der letzten Zeile der Zellen zu einer Lesestufe (RL) ermöglichen, mit für alle diese Leitungen gemeinsamen Taktsignalen zur Verursachung dieser Übertragungen, dadurch gekennzeichnet, daß ferner Mittel vorgesehen sind, um an gewisse dieser Elektroden, sogenannte "Sperrelektroden" (ES1, ES2), entweder die Taktsignale zur Ermöglichung der Übertragung oder ein Sperrpotential zum Verhindern jeder Übertragung bei dieser Elektrode anzulegen, während die zwischen dieser Elektrode und der Lesestufe liegenden anderen Elektroden weiterhin die die Übertragung ermöglichenden Potentiale empfangen, wobei die Sperrelektroden Elektroden sind, die auf jeden Fall vorgesehen wären, wenn keine Programmierung der Anzahl von Zeilen vorhanden ist.

2. Sensor nach Anspruch 1, dadurch gekennzeichnet, daß er mehrere Sperrelektroden an bestimmten Zeilenpositionen im Sensor enthält, und Mittel enthält, um eine dieser Elektroden, die abhängig von der Beleuchtung ausgewählt ist, im Sperrbetrieb arbeiten zu lassen.

3. Sensor nach einem der vorhergehenden Ansprüche, dadurch gekennzeichnet, daß die Schrittweite der Zeilen entsprechend den Registerelektroden für alle Zeilen einschließlich der, die Sperrelektroden enthalten, konstant ist.

4. Sensor nach einem der Ansprüche 1 bis 3, dadurch gekennzeichnet, daß bei auf der Seite des Sensors liegender Lesestufe auf der anderen Seite ein Ladungsableitausgang (DR) vorgesehen ist, der das Überlaufen von Ladungen über die Sperrelektrode vermeidet.

5. Sensor nach einem der Ansprüche 1 bis 4, dadurch gekennzeichnet, daß die Programmierung der Anzahl k von Leitungen, die bei der Integration und der Übertragung von Ladungen angewendet wird, von der Beleuchtung des analysierten Bildes abhängt, die durch Filterung von durch den Sensor erzeugten Ladungen am Ausgang einer Lesestufe gemessen wird.

6. Sensor nach einem der Ansprüche 1 bis 5, dadurch gekennzeichnet, daß die Programmierung der Anzahl k der bei der Integration und der Übertragung von Ladungen angewendet wird, von der Beleuchtung des analysierten Bildes oder eines Abschnittes des analysierten Bildes abhängt, die von einem speziellen Sensor gemessen wird.

## Claims

1. Multilinear photosensitive sensor with n lines operating in charge transfer and integration mode and organized as n lines of M columns of elementary photosensitive cells, with programming of the number k of lines actually used in charge transfer and integration mode, each column constituting a shift register and the sensor including register electrodes in lines enabling charges stored in one line to be transferred to the succeeding adjacent line for all the registers and charges from the last line of cells to be transferred to a readout stage (RL), with clock signals common to all the lines so as to trigger these transfers, characterized in that there is furthermore provision for means for applying to certain of the said electrodes termed "blocking electrodes" (ES1, ES2), either the clock signals which allow the transfer, or a blocking potential precluding any transfer in regard to this electrode while the other electrodes situated between this electrode and the readout stage continue to receive potentials which allow transfers, the blocking electrodes being electrodes which would in any event be provided for if programming of the number of lines had not been possible.

2. Sensor according to Claim 1, characterized in that it includes several blocking electrodes at specified line positions in the sensor, and means for operating, in blocking mode, one of these electrodes chosen as a function of the illumination.

3. Sensor according to one of the preceding claims, characterized in that the spacing of the lines corresponding to the register electrodes is constant for all the lines, including those which contain blocking electrodes.

4. Sensor according to one of Claims 1 to 3, characterized in that, the readout stage being situated on one side of the sensor, there is provision on the other side for a charge removal drain (DR) which avoids the overflow of charges across the blocking electrode.

5. Sensor according to one of Claims 1 to 4, characterized in that the programming of the number k of lines used in charge transfer and integration mode depends on the illumination of the analysed image, measured by filtering at the output of a stage for reading out the charges generated by the sensor.

6. Sensor according to one of Claims 1 to 5, characterized in that the programming of the number k of lines used in charge transfer and integration mode depends on the illumination of the analysed image or of a portion of the analysed image, measured by a particular sensor.
